# EUROPÄISCHE PATENTANMELDUNG

(11) **EP 0 766 025 A1**
(43) Veröffentlichungstag der Anmeldung: **02.04.1997**
(21) Anmeldenummer: 96112585.3
(22) Anmeldetag: 03.08.1996
(51) Int. Cl.: F16H 61/46, E02F 9/22

(54) **Verfahren zur Steuerung der Schaltzustände eines stufenlos regelbaren hydrostatischen Fahrantriebes**

(30) Priorität: 27.09.1995 DE 19535909
(71) Anmelder: O&K ORENSTEIN & KOPPEL AG, 13581 Berlin (DE)
(72) Erfinder: Holtmann, Michael, 44795 Bochum (DE)

(57) **Zusammenfassung**

Vorgeschlagen wird ein Verfahren zur Steuerung der Schaltzustände eines stufenlos regelbaren hydrostatischen Fahrantriebes für bodengebundene Arbeitsmaschinen. Während des Anfahr- und Bremsvorganges der Arbeitsmaschine wird in der ersten Schaltstufe durch den infolge des Ausschwenkens der Fahrantriebspumpe entstehenden Systemdruckaufbau der bzw. die durch eine Schwenkwinkelbegrenzung in ihren kleinsten Schluckvolumen begrenzten Verstellmotor bzw. Verstellmotoren aus der Vgmin-Lage ausgeschwenkt, wobei der Schwenkwinkel des bzw. der null-schwenkbaren Verstellmotoren eine Funktion des Systemdruckes, der Fahrpedalstellung, der Brennkraftmaschinendrehzahl bzw. einer beliebigen Kombination dieser Größen darstellt, die zu- oder abgeschaltet werden kann. Nach Erreichen der Schaltgeschwindigkeit für den Übergang von der ersten in die zweite Schaltstufe wird das Rückschwenken des bzw. der Verstellmotoren dadurch eingeleitet, daß die Schwenkwinkelbegrenzung zur Limitierung des kleinsten Schluckvolumens Vgmin ausgeschaltet wird, wodurch der Verstellmotor seine Null-Lage Vg = 0 cm³ erreichen kann. Anschließen wird die Verstelleinrichtung des Verstellmotors ausgeschaltet, wodurch der Verstellmotor in seine Null-Lage einschwenkt. Im wesentlichen zeitgleich wird der Volumenstrom der Fahrantriebspumpe um den Betrag zurückgenommen, der dem Volumenstrom des Verstellmotors vor dem Schaltvorgang entspricht, wobei der Schaltvorgang dadurch beendet wird, daß der Verstellmotor durch die Schaltkupplung von der Abtriebswelle getrennt wird. Mit zunehmendem Schwenkwinkel der Fahrantriebspumpe wird die Fahrgeschwindigkeit der Arbeitsmaschine in der zweiten Schaltstufe bei Bedarf auf den auslegungsbedingten Maximalwert gesteigert. Zur Wiederabsenkung der Drehzahl der Abtriebswelle werden die vorstehenden Schritte und Vorgänge in umgekehrter Reihenfolge durchlaufen.

## Beschreibung

Die Erfindung betrifft ein Verfahren zur Steuerung der Schaltzustände eines stufenlos regelbaren hydrostatischen Fahrantriebes für bodengebundene Arbeitsmaschinen, bestehend aus folgenden Bauteilen:
- mindestens einer verstellbaren Fahrantriebspumpe
- mindestens einem bis in die Nullage schwenkbaren Versteilmotor in hydraulischer Parallelschaltung mit mindestens einem weiteren Verstell- oder Konstantmotor, wobei der oder die Verstellmotoren über eine Schaltkupplung von der gemeinsamen Abtriebswelle trennbar sind.

Ein derartiger stufenlos regelbarer hydrostatischer Fahrantrieb ist der DE-A 39 07 633 zu entnehmen, wobei die Fahrmotoren von einer gemeinsamen verstellbaren Fahrantriebspumpe gespeist werden und in hydraulischer Parallelschaltung mindestens ein bis in eine Null-Lage rückschwenkbarer Verstellmotor und mindestens ein Konstantmotor vorgesehen sind, die in mindestens einem Fall über ein Vorgelege auf einen gemeinsamen Ausgang arbeiten, wobei zwischen dem Verstellmotor und dem Ausgang eine Schaltkupplung vorgesehen ist. Zum Anfahren der selbstfahrenden Maschine werden die alle auf volles Schluckvolumen gestellten Fahrmotoren mit einem zunehmenden Ausschwenkwinkel der Fahrantriebspumpe gespeist. Bei vollem Ausschwenkwinkel der Fahrantriebspumpe wird dann der Verstellmotor kontinuierlich bis in die Grenzstellung seiner höchsten, nach technischen oder wirtschaftlichen Gesichtspunkten bestimmten zugelassenen Drehzahl zurückgeschwenkt. Nach Erreichen der Grenzstellung wird der Verstellwinkel des Verstellmotors sprungartig bis in die Selbsthemmung geführt und der Ausschwenkwinkel der Fahrantriebspumpe um den Betrag zurückgenommen, der dem letztlichen Schluckvolumen des Verstellmotors entsprach und es wird der Verstellmotor durch die Schaltkupplung vom Ausgang abgeschaltet. Der Ausschwenkwinkel der Fahrantriebspumpe wird nun wieder zunehmend auf den vollen Ausschwenkwinkel geführt, wobei dann die höchste Antriebsgeschwindigkeit erreicht ist. Zum Wiederabsenken der Antriebsdrehzahl des Ausgangs werden die vorstehenden Schritte und Vorgänge umgekehrt durchlaufen.

Nachteil dieses St.d.T. ist, daß das Fahrverhalten im Geschwindigkeitsbereich der ersten Schaltstufe sowie das Anfahrverhalten bei der vorgegebenen Verfahrensweise in Verbindung mit einer druckproportionalen Ansteuerung der Versteilmotoren eine unzureichende Proportionalität und Feinfühligkeit aufweist.

Um im Rahmen der Optimierung des Anfahr- und Fahrverhaltens im ersten Gang die Forderung nach proportionalem feinfühligem Fahren in der ersten Fahrstufe erfüllen zu können, ist es notwendig, unterhalb des Regelbeginns des Verstellmotors ein so großes Schluckvolumen zur Verfügung zu stellen, daß der Fahrdruck bei feinfühligem Anfahren und Fahren im ersten Gang nicht den eingestellten Regelbeginn des bzw. der Verstellmotoren erreicht.

Dies ist zum einen durch die Vergrößerung der starr mit der Antriebswelle gekoppelten Konstantmotoren möglich, was jedoch den Nachteil in sich birgt, daß der Förderstrom der Antriebspumpe bei maximaler Fahrgeschwindigkeit ebenfalls proportional zur Schluckvolumenvergrößerung der in der zweiten Schaltstufe treibenden Konstantmotoren wächst.

Da der vorliegende St.d.T. auf der Null-Schwenkbarkeit des Verstellmotors basiert, besteht darüber hinaus bei hochdruckproportionaler Ansteuerung desselben die Gefahr, daß bei Ausfall der elektrischen Schaltlogik bzw. bei manueller Schaltung die auslegungsbedingte Schaltgeschwindigkeit von der ersten in die zweite Schaltstufe und damit die zulässige Drehzahlgrenze des Verstellmotors überschritten wird. Diese Gefahr kann durch Einsatz einer beispielsweise mechanischen Schwenkwinkelbegrenzung vermieden werden, die verhindern kann, daß der Verstellmotor in der ersten Schaltstufe seine Null-Lage Vg = 0 cm³ erreicht.

Ein mechanische Positioniereinrichtung zum Verstellen der kleinsten Verstellbereichsgrenze eines verstellbaren Hydromotors ist bereits aus der DE-C 42 34 826 bekannt, wobei diese jedoch ausschließlich in der zweiten Schaltstufe und hierbei nur im Schubbetrieb zum Einsatz gelangt. Zielsetzung war hier, daß das minimale Verdrängungsvolumen des verstellbaren Hydromotors bei Beginn des Bremsvorganges in der zweiten Schaltstufe größer als das in der ersten Schaltstufe ist, und zwar vorzugsweise um soviel größer, daß der sich beim Umschalten von der ersten in die zweite Schaltstufe ergebende Bremsmomentverlust durch entsprechendes Ausschwenken des Hydromotors und damit Vergrößern des aufgebrachten Bremsmomentes ausgeglichen wird.

Ziel des Erfindungsgegenstandes ist es, das im gattungsbildenden Teil des ersten Patentanspruches beschriebene Verfahren für den konkret dargestellten hydrostatischen Fahrantrieb gemäß DE-A 39 07 633 dahingehend weiterzubilden, daß neben der Verbesserung des Anfahrverhaltens sowie des Fahrverhaltens im ersten Gang bei möglichst geringem Steuerungsaufwand ein im wesentlichen ruckfreier Schaltvorgang sowohl von der ersten in die zweite Schaltstufe als auch umgekehrt realisiert werden kann. Darüber hinaus soll erreicht werden, daß durch Begrenzung des kleinsten Schluckvolumens des Verstellmotors in der ersten Schaltstufe die auslegungsbedingte Schaltgeschwindigkeit von der ersten in die zweite Schaltstufe unter Zugrundelegung einer definierten maximalen Pumpenfördermenge nicht überschritten wird, wodurch auch bei hochdruck-proportionaler Ansteuerung des Verstellmotors eine Überschreitung der zulässigen Drehzahlgrenze desselben bei Ausfall der elektrischen Schaltlogik bzw. bei manueller Schaltung durch geeignete Wahl des kleinsten Schluckvolumens verhindert wird.

Dieses Ziel wird verfahrensgemäß durch folgende Arbeitsschritte erreicht:
a) Während des Anfahr- und Bremsvorganges der Arbeitsmaschine in der ersten Schaltstufe wird der Verstellmotor aus der durch eine Schwenkwinkelbegrenzung definierten Ausgangslage ausgeschwenkt, wobei der Schwenkwinkel des Verstellmotors eine Funktion des Fahrdruckes und/oder der Fahrpedalstellung und/oder der Brennkraftmaschinendrehzahl ist,
b) nach Erreichen der Schaltgeschwindigkeit für den Übergang von der ersten in die zweite Schaltstufe wird das Rückschwenken des Verstellmotors dadurch eingeleitet, daß die Schwenkwinkelbregrenzung zur Limitierung des kleinsten Schluckvolumens (Vgmin) dergestalt betätigt wird, daß der Verstellmotor seine Null-Lage (Vg = 0 cm³) dann erreicht, wenn eine den Verstellmotor betätigende hochdruckproportionale Verstelleinrichtung, die eine proportionale Beziehung zwischen Schwenkwinkel und Fahrhochdruck aufweist, durch ein Ventil vom Fahrhochdruck getrennt wird, wodurch der Verstellmotor in seine Null-Lage(Vg = 0 cm³) einschwenkt,
c) Zeitgleich oder zeitlich vor- bzw. nachgelagert wird der Volumenstrom der Fahrantriebspumpe um den Betrag zurückgenommen, der dem Volumenstrom des Verstellmotors vor dem Schaltvorgang entspricht, wobei der Schaltvorgang dadurch beendet wird, daß der Verstellmotor durch die Schaltkupplung von der Abtriebswelle getrennt wird,
d) Mit zunehmendem Schwenkwinkel der Fahrantriebspumpe wird die Fahrgeschwindigkeit der Arbeitsmaschine in der zweiten Schaltstufe bei Bedarf auf ihren auslegungsbedingten Maximalwert gesteigert,
e) Zur Wiederabsenkung der Drehzahl der Abtriebswelle werden die vorstehenden Schritte und Vorgänge in umgekehrter Reihenfolge durchlaufen.

Vorteilhafte Weiterbildungen des Verfahrens sind den zugehörigen Unteransprüchen zu entnehmen.

Die untere Verstellbereichsgrenze und damit die Ausgangslage des Verstellmotors in der ersten Schaltstufe ist das durch die aktivierte Schwenkwinkelbegrenzung definierte Mindestschluckvolumen Vgmin. Mit den verfahrensgemäßen Gegebenheiten wird somit folgenden Forderungen Rechnung getragen:
1. Unterhalb des Regelbeginns des Verstellmotors ein so großes Schluckvolumen zur Verfügung zu stellen, daß der Anfahrdruck bei feinfühligem Anfahren in der ersten Schaltstufe nicht den eingestellten Regelbeginn des hochdruckproportional angesteuerten Verstellmotors erreicht, wodurch eine hochdruckunabhängige proportionale Beziehung zwischen dem Volumenstsrom der Fahrantriebspumpe und der Fahrzeuggeschwindigkeit erzielt wird.
2. Das kleinste Schluckvolumen des Verstellmotors in der ersten Schaltstufe so groß zu machen, daß die auslegungsbedingte Schaltgeschwindigkeit von der ersten in die zweite Schaltstufe unter Zugrundelegung einer definierten maximalen Pumpenfördermenge nicht überschritten wird, wodurch auch bei hochdruckproportionaler Ansteuerung des Verstellmotors eine Überschreitung der zulässigen Drehzahlgrenze des Verstellmotors bei Ausfall der elektronischen Schaltlogik bzw. bei manueller Schaltung durch geeignete Wahl des kleinsten Schluckvolumens verhindert wird.
3. Darüber hinaus ist durch die Begrenzung des minimalen Schluckvolumens (Vgmin) in der ersten Schaltstufe die Möglichkeit einer manuellen Schaltung in Verbindung mit einer elektrischen, hydraulischen oder mechanischen Rückschaltsicherung gegeben.

Die für die Getriebeschaltung notwendigen Schaltsignale können manuell oder automatisch durch eine geschwindigkeits- bzw. drehzahlabhängige Schaltlogik vorgegeben werden. Das Rückschalten aus der zweiten in die erste Schaltstufe wird vorzugsweise durch eine hydraulische, mechanische oder elektrische Sperrschaltung oberhalb der Grenzdrehzahl des bzw. der Verstellmotoren verhindert. Somit ist die Vorwahl der ersten Schaltstufe auch oberhalb der Grenzdrehzahl des bzw. der Verstellmotoren und damit zu einem beliebigen Zeitpunkt in der zweiten Schaltstufe möglich, wohingegen der eigentliche Schaltvorgang erst bei Unterschreiten der Grenzdrehzahl des bzw. der Versteilmotoren freigegeben wird.

Führt das Ausschwenken des bzw. der Verstellmotoren während der Bremsphase in der ersten Schaltstufe zu ungewollt hohen Verzögerungswerten, so ist es durch die gezielte Auswahl und Ansteuerung eines Ventils möglich, das Ausschwenken des bzw. der Verstellmotoren in der Bremsphase der ersten Schaltstufe zu verhindern. Speziell in offenen Hydraulikkreisläufen ist es in Verbindung mit einer druckproportionalen Ansteuerung des Verstellmotors möglich, den das Ventil versorgenden Hochdruckabgriff zwischen Fahrbremsventil und Hydraulikpumpe anzuordnen, wodurch der sich in der Bremsphase zwischen den Hydromotoren und dem Fahrbremsventil aufbauende Hochdruck in der ersten Schaltstufe nicht auf die Hochdruckansteuerung des Verstellmotors wirkt und das Ausschwenkverhalten des Verstellmotors in der Bremsphase dadurch unterbunden wird.

Die Erfindung ist anhand eines Ausführungsbeispieles dargestellt und wird wie folgt beschrieben. Es zeigen:

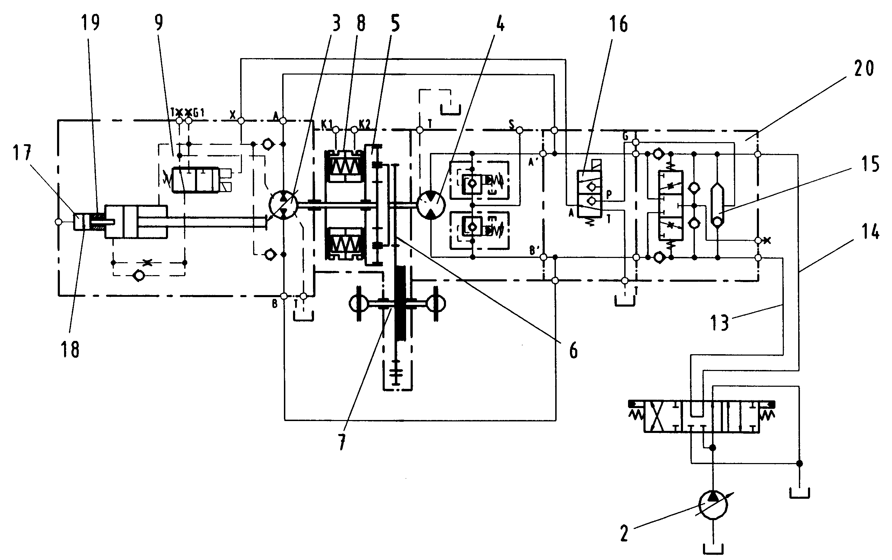

Der in der einzigen Figur als Prinzipskizze dargestellte hydrostatische Fahrantrieb 1 beinhaltet im wesentlichen folgende Komponenten:
eine verstellbare Fahrantriebspumpe 2, einen schwenkbaren Verstellmotor 3, in hydraulischer Parallelschaltung dazu einen Konstantmotor 4, die beide über getrennte Vorgelege 5,6 auf eine gemeinsame Abtriebswelle 7 arbeiten, wobei der Verstellmotor 3 über eine Schaltkupplung 8 von der gemeinsamen Abtriebswelle 7 getrennt werden kann. Der Verstellmotor 3 ist mit einer hochdruckproportionalen Verstelleinrichtung 9 versehen. Neben der Betätigung der Verstelleinrichtung 9 durch den Fahrdruck, besteht ebenfalls die Möglichkeit, den Schwenkwinkel des Verstellmotors 3 über eine entsprechende Elektronik als Funktion der Fahrpedalstellung bzw. der Brennkraftmaschinendrehzahl anzusteuern.

Im Bereich der Verstelleinrichtung 9 des Verstellmotors 3 ist eine Schwenkwinkelbegrenzung 17 zur Begrenzung des kleinsten Schluckvolumens Vgmin vorgesehen, die in diesem Beispiel aus einem in ihrem Weg begrenzten Kolben 18 gebildet ist, der gegen einen Anschlag 19 als Wegbegrenzung drückt. Vgmin ist hierbei das durch den Anschlag 19 begrenzte kleinste Schluckvolumen. Alternativ kann die technische Ausführung der Schwenkwinkelbregrenzung auch durch die Bestromung eines Proportionalmagneten gebildet werden, der entsprechend seiner Stromwert-Solivorgabe Einfluß auf das Regelverhalten des Verstellmotors 3 mit elektroproportionalem Ausschwenkverhalten nehmen kann. Bei Ausschwenken der Fahrantriebspumpe wird der sich im System, d.h. in den Hochdruckleitungen 13 bzw. 14 aufbauende Fahrdruck über den Hochdruckabgriff 15 am Ventil 16 wirksam, wobei bei geschaltetem Ventil 16 die hochdruckproportionale Verstelleinrichtung 9 den Versteilmotor 3 oberhalb des Druckregelbeginns aus der nach unten durch die Schwenkwinkelbegrenzung 17 begrenzten Ausgangslage Vgmin in Richtung Vgmax verstellt.

Die Schaltfunktion stellt sich im wesentlichen wie folgt dar:
Während des Anfahr- und Bremsvorganges der nicht weiter dargestellten Arbeitsmaschine, wird in der ersten Schaltstufe durch den infolge des Ausschwenkens der Fahrantriebspumpe 2 entstehenden Fahrdruckaufbau der auf kleinstes Schluckvolumen gestellte Verstellmotor 3 aus der durch die Schwenkwinkelbegrenzung 17 vorgegebenen Vgmin-Lage ausgeschwenkt, wobei der Schwenkwinkel des Verstellmotors 3 in diesem Beispiel eine Funktion des Fahrdrucks darstellt, die über das Ventil 16 zu- oder abgeschaltet werden kann. Nach Erreichen der Schaltgeschwindigkeit für den Übergang von der ersten in die zweite Schaltstufe wird das Rückschwenken des Verstellmotors 3 dadurch eingeleitet, daß die Schwenkwinkelbegrenzung 17 zur Limitierung des kleinsten Schluckvolumens Vgmin ausgeschaltet wird, wodurch der Verstellmotor 3 seine Null-Lage Vg = 0 cm³ erreichen kann. Anschließend wird die Verstelleinrichtung 9 des Verstellmotors 3 durch das Ventil 16 vom Hochdruckbereich 13/14 getrennt, wodurch der Verstellmotor 3 in seine Null-Lage Vg = 0 cm³ einschwenkt. Zeitgleich bzw. zeitlich vor- oder nachgelagert wird der Förderstrom der Fahrantriebspumpe 2 um den Betrag zurückgenommen, der dem Volumenstrom des Verstellmotors 3 vor dem Schaltvorgang entspricht, wobei der Schaltvorgang dadurch beendet wird, daß der Verstellmotor 3 durch die Schaltkupplung 8 von der Abtriebswelle 7 getrennt wird. Mit zunehmendem Schwenkwinkel der Fahrantriebspumpe 2 wird die Fahrgeschwindigkeit der Arbeitsmaschine in der zweiten Schaltstufe bei Bedarf auf ihren auslegungsbedingten Maximalwert gesteigert. Bei Verwendung von offenen Hydraulikkreisen wird in Verbindung mit einer druckproportionalen Ansteuerung des Verstellmotors 3 der das Ventil 16 versorgende Hochdruckabgriff 15 zwischen einem Fahrbremsventil 20 und der Hydraulikpumpe 2 vorgesehen, wodurch der sich in der Bremsphase zwischen den Hydromotoren 3,4 und dem Fahrbremsventil 20 aufbauende Hochdruck in der ersten Schaltstufe nicht auf die Hochdruckansteuerung des Verstellmotors 3 wirkt und das Ausschwenkverhalten desselben in der Bremsphase dadurch unterbunden wird. Zur Wiederabsenkung der Drehzahl der Abtriebswelle 7 werden die vorstehenden Schritte und Vorgänge in umgekehrter Reihenfolge durchlaufen.

## Patentansprüche

1. Verfahren zur Steuerung der Schaltzustände eines stufenlos regelbaren hydrostatischen Fahrantriebes für bodengebundene Arbeitsmaschinen, bestehend aus folgenden Bauteilen:
- mindestens einer verstellbaren Fahrantriebspumpe (2)
- mindestens einem, bis in die Nullage schwenkbaren Verstellmotor (3) in hydraulischer Parallelschaltung mit mindestens einem weiteren Verstell- oder Konstantmotor (4), wobei der oder die Verstellmotoren (3) über eine Schaltkupplung (8) von der gemeinsamen Abtriebswelle (7) trennbar sind,
gekennzeichnet durch folgende Arbeitsschritte
a) während des Anfahr- und Bremsvorganges der Arbeitsmaschine in der ersten Schaltstufe wird der Verstellmotor (3) aus der durch eine Schwenkwinkelbegrenzung (17) definierten Ausgangslage ausgeschwenkt, wobei der Schwenkwinkel des Verstellmotors (3) eine Funktion des Fahrdruckes und/oder der Fahrpedalstellung und/oder der Brennkraftmaschinendrehzahl ist,
b) nach Erreichen der Schaltgeschwindigkeit für den Übergang von der ersten in die zweite Schaltstufe wird das Rückschwenken des Verstellmotors (3) dadurch eingeleitet, daß die Schwenkwinkelbregrenzung (17) zur Limitierung des kleinsten Schluckvolumens (Vgmin) dergestalt betätigt wird, daß der Verstellmotor (3) seine Null-Lage (Vg = 0 cm³) dann erreicht, wenn eine den Verstellmotor (3) betätigende hochdruckproportionale Verstelleinrichtung (9), die eine proportionale Beziehung zwischen Schwenkwinkel und Fahrhochdruck aufweist, durch ein Ventil (16) vom Fahrhochdruck (13/14) getrennt wird, wodurch der Verstellmotor (3) in seine Null-Lage (Vg = 0 cm³) einschwenkt,
c) zeitgleich oder zeitlich vor- bzw. nachgelagert wird der Volumenstrom der Fahrantriebspumpe (2) um den Betrag zurückgenommen, der dem Volumenstrom des Verstellmotors (3) vor dem Schaltvorgang entspricht, wobei der Schaltvorgang dadurch beendet wird, daß der Verstellmotor (3) durch die Schaltkupplung (8) von der Abtriebswelle (7) getrennt wird,
d) mit zunehmendem Schwenkwinkel der Fahrantriebspumpe (2) wird die Fahrgeschwindigkeit der Arbeitsmaschine in der zweiten Schaltstufe bei Bedarf auf ihren auslegungsbedingten Maximalwert gesteigert,
e) zur Wiederabsenkung der Drehzahl der Abtriebswelle (7) werden die vorstehenden Schritte und Vorgänge in umgekehrter Reihenfolge durchlaufen

2. Verfahren nach Anspruch 1, dadurch gekennzeichnet, daß die Geschwindigkeit für den Übergang von der zweiten in die erste Schaltstufe unterschiedlich zu der Geschwindigkeit für den Übergang von der ersten in die zweite Schaltstufe vorgesehen wird.

3. Verfahren nach den Ansprüchen 1 und 2, dadurch gekennzeichnet, daß sofern der Schwenkwinkel des Verstellmotors (3) eine proportionale Funktion des Fahrhochdruckes ist, dieser durch das Ventil (16) zu- bzw. abgeschaltet wird.

4. Verfahren nach Anspruch 3, dadurch gekennzeichnet, daß sofern das Ausschwenken des Verstellmotors (3) während der Abbremsphase in der ersten Schaltstufe zu ungewollt hohen Verzögerungswerten führt, das Ausschwenken des Verstellmotors (3) durch gezielte Auswahl und Ansteuerung des Ventils (16) verhindert wird.

5. Verfahren nach den Ansprüchen 1 bis 4, dadurch gekennzeichnet, daß die für den Schaltvorgang von der ersten in die zweite Schaltstufe notwendigen Signale manuell oder automatisch vorgegeben werden.

6. Verfahren nach den Ansprüchen 1 bis 5, dadurch gekennzeichnet, daß das Rückschalten aus der zweiten in die erste Schaltstufe durch eine hydraulische, mechanische oder elektrische Sperrschaltung oberhalb der Grenzdrehzahl des Verstellmotors (3) verhindert wird.

7. Verfahren nach den Ansprüchen 1 bis 6, dadurch gekennzeichnet, daß der Versteilmotor (3) mit einer zu- bzw. abschaltbaren Schwenkwinkelbegrenzung (17) zur Limitierung des kleinsten Schluckvolumens (Vgmin) in der ersten Schaltstufe versehen ist, die bei Ausfall der Schaltlogik, bei manueller Schaltung, bzw. bei vorgewählter Betriebsart 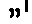 Fahren im ersten Gang", ein Überschreiten der zulässigen Grenzdrehzahl des Verstellmotors (3) verhindert.

8. Verfahren nach den Ansprüchen 1 bis 7, dadurch gekennzeichnet, daß der Regler des Verstellmotors (3) mit einer elektrischen, mechanischen oder hydraulischen An- bzw. Übersteuerung ausgeführt wird, die die Limitierung des kleinsten Schluckvolumens (Vgmin) in der ersten Schaltstufe ermöglicht, wodurch der Fahrantrieb in der ersten Schaltstufe auf jede beliebige Maximalgeschwindigkeit zwischen v = 0 km/h und v_{schaft} begrenzt wird.

9. Verfahren nach einem oder mehreren der Ansprüche 1 bis 8, dadurch gekennzeichnet, daß der Regler des Verstellmotors (3) mindestens einen Proportionalmagneten aufweist, der entsprechend seiner Stromsollwertvorgabe Einfluß auf den Regelmechanismus des Verstellmotors (3) nimmt, so daß sich entsprechend der Stromsollwertvorgabe ein definfiertes minimales Schluckvolumen einstellt.

10. Verfahren nach einem oder mehreren der Ansprüche 1 bis 9, dadurch gekennzeichnet, daß das durch die Schwenkwinkelbegrenzung (17) definierte kleinste Schluckvolumen (Vgmin) auch während der Betriebsphase der ersten Schaltstufe veränderbar ist.

11. Verfahren nach einem oder mehreren der Ansprüche 1 bis 10, dadurch gekennzeichnet, daß bei Verwendung von offenen Hydraulikkreisen in Verbindung mit einer druckproportionalen Ansteuerung des Verstellmotors (3) der das Ventil (16) versorgende Hochdruckabgriff (15) zwischen einem Fahrbremsventil (20) und der Hydraulikpumpe (2) angeordnet wird, wodurch der sich in der Bremsphase zwischen den Hydromotoren (3,4) und dem Fahrbremsventil (20) aufbauende Hochdruck in der ersten Schaltstufe nicht auf die Hochdruckansteuerung des Verstellmotors (3) wirkt und das Ausschwenkverhalten desselben in der Bremsphase dadurch unterbunden wird.
